# EUROPÄISCHE PATENTANMELDUNG

(11) **EP 2 363 386 A1**
(43) Veröffentlichungstag der Anmeldung: **07.09.2011**
(21) Anmeldenummer: 10160366.0
(22) Anmeldetag: 19.04.2010
(51) Int. Cl.: C04B 40/06

(54) **Reduktion von Cr(VI)-Ionen in Zement oder zementhaltigen Produkten**

(30) Priorität: 23.02.2010 DE 102010009444; 23.02.2010 DE 202010002838 U
(71) Anmelder: Mig Material Innovative Gesellschaft MBH, 33154 Salzkotten (DE)
(72) Erfinder: Brandt, Burkhard, 33106 Paderborn (DE)
(74) Vertreter: Gulde Hengelhaupt Ziebig & Schneider

(57) **Zusammenfassung**

Die vorliegende Erfindung bezieht sich auf eine Zusammensetzung für die Reduktion von Cr(VI)-lonen in Zement oder zementhaltigen Produkten, die dadurch gekennzeichnet ist, dass die Zusammensetzung Fe(II)-lonen und/oder Sb(III)-lonen und mindestens 0,1% Sn(II)-lonen enthält, wobei sich die %-Angaben auf das Gesamtgewicht der Zusammensetzung beziehen, sowie deren Verwendung.

## Beschreibung

Die Reduzierung von Chrom(VI) (Chromat, Cr(VI)-lonen) zu Chrom(III) ist ein wichtiger Bestandteil des Umweltschutzes. Es gibt aus der Patent- und chemischen Literatur mehrere beschriebene Reduktionssysteme zur Cr(VI) ― Reduktion und deren Anwendungen. Ein wichtiges Beispiel für den Einsatz von Cr(VI)-Reduktoren ist die Chromallergie, die beispielsweise auf dem Vorhandensein von Cr(VI) z.B. in zementhaltigen Produkten beruhen kann.

Am 17. Januar 2005 trat eine EU-Richtline in Kraft (EU Direktive 2003/53/EC), nach der der Cr(VI)-Gehalt im Zement nicht größer 2 ppm sein darf. Daneben ist jedes zementhaltige Produkt mit einem Haltbarkeitsdatum des Chromatreduktors im Zement zu versehen. Wird die Lagerzeit, d.h. der Grenzwert von 2 ppm Cr(VI) im Zementanteil, überschritten ist der Zement oder das zementhaltige Produkt zu verwerfen. Deshalb ist eine langlebige Lagerzeit von Cr(VI)-Reduktoren im Zement von großem ökonomischen Interesse des Zementherstellers bzw. des Verkäufers. Es ist darum ein wichtiges Ziel die Lagerzeiten von Zementen zu erhöhen. Ebenso ist eine Kostenreduktion der teuren Cr(VI)-Reduktoren wünschenswert.

Als Reduktionsmittel zur Reduktion der schädlichen Cr(VI)-lonen in Zement oder zementhaltigen Produkten werden in EP 0 054 314 und WO 82/02040 Eisen(II)-Ionen haltige Verbindungen vorgeschlagen, insbesondere wird Fe(II)-Sulfat in einer Konzentration von 0,01 bis 10% verwendet. In DE 198 42 300 werden dazu Zinn(II)-Ionen haltige Verbindungen vorgeschlagen, insbesondere werden Sn(II)-lonen in einer Konzentration von mindestens 0,02% eingesetzt. In EP 1 923 370 werden dagegen Antimon(III)-lonen haltige Verbindungen offenbart, wobei die Sb(III)-lonen haltige Verbindung in einer Konzentration von 8×10⁻⁴ bis 8×10⁻²% pro ppm Cr(VI) angewendet, wobei sich die %-Angaben auf das Gesamtgewicht des Zements oder Zementanteils beziehen. Ein Problem all dieser Formulierungen ist es, dass diese zwar geeignet sind Cr(VI) zu reduzieren, allerdings nicht über einen längeren Lagerungszeitraum.

Aufgabe der Erfindung ist es, einen oder mehrere Nachteile des Standes der Technik zu vermindern oder zu überwinden. Insbesondere ist es eine Aufgabe der Erfindung, Cr(VI)-reduzierende Zusammensetzungen bereitzustellen, die die Langzeitlagerdauer von damit behandeltem Zement oder zementhaltigen Produkten erhöhen und ggf. die Kosten für den Einsatz von Cr(VI)-Reduktoren verringern.

Die Aufgabe wird gelöst durch Bereitstellung einer Zusammensetzung für die Reduktion von Cr(VI)-lonen in Zement oder zementhaltigen Produkten, die dadurch gekennzeichnet ist, dass die Zusammensetzung Fe(II)-lonen und/oder Sb(III)-lonen und mindestens 0,1% Sn(II)-lonen enthält, wobei sich die %-Angaben auf das Gesamtgewicht der Zusammensetzung beziehen.

Überraschender Weise wurde gefunden, dass durch den Zusatz von mindestens 0,1% Sn(II)-lonen zu den als Cr(VI)-Reduktionsmittel bereits bekannten Fe(II)-und/oder Sb(III)-lonen basierten Verbindungen bzw. Formulierungen, eine Steigerung der Reduktionskraft um über 5% erreicht wird und gleichzeitig die Lagerstabilität von damit behandelten Zement und/oder zementhaltigen Produkten auf über 6 Monaten erweitert wird. Besonders vorteilhaft ist eine erfindungsgemäße Zusammensetzung enthaltend Sb(III)-lonen und mindestens 0,1% Sn(II)-lonen, da für diese Zusammensetzung zusätzlich eine Kosteneinsparung gegenüber den aus DE 20 2004 015 458 U1 bekannten Chrom(VI) ― Reduktoren erreicht werden kann. Der Preis für Sn(II)-Sulfat liegt bei 9 €/t, während Sb(III)-Tratrat bei 6,00 €/t taxiert. Es wird also gleichzeitig ein Synergismus zwischen der verlängerten Lagerdauer und einer Kostenreduktion erreicht. Zusätzlich wurde gefunden, dass die erfindungsgemäße Zusammensetzung, insbesondere Zusammensetzungen mit Sb(III)-lonen, einen Mahlvorgang in der Zementmühle unterstützten kann und dadurch eine Verwendung als Mahlhilfsmittel gegeben ist, welches vor oder während des Mahlvorgangs zugesetzt werden kann.

Die erfindungsgemäße Zusammensetzung eignet sich für die Reduktion von Cr(VI)-Ionen in Zement und/oder zementhaltigen Produkten. Dabei werden unter zementhaltigen Produkten alle Produkte oder Zusammensetzungen verstanden, die Zement enthalten oder daraus bestehen. Bevorzugt enthalten zementhaltige Produkte den Zementanteil als Bindemittel. Insbesondere umfassen zementhaltige Produkte hydraulisch abbindende Massen, wobei der Zementanteil als Bindemittel wirkt, wie beispielsweise Zementleim, Mörtel oder Beton.

Die erfindungsgemäße Zusammensetzung enthält die bekannten Cr(VI)-Reduktoren Fe(II)-lonen und/oder Sb(III)-lonen. Bevorzugt enthält die erfindungsgemäße Zusammensetzung Sb(III)-lonen. Um einen besonders ausgeprägten reduzierenden Effekt zu erzielen, weist die erfindungsgemäße Zusammensetzung mindestens 0,01 % Fe(II)-lonen und/oder Sb(III)-lonen auf, wobei sich die %-Angaben auf das Gesamtgewicht der Zusammensetzung beziehen. Bevorzugt enthält die erfindungsgemäße Zusammensetzung mindestens 0,1% Fe(II)-lonen und/oder Sb(III)-lonen, besonders bevorzugt 0,1 bis 75% Fe(II)-lonen und/oder Sb(III)-lonen, ganz besonders bevorzugt 1 bis 50% Fe(II)-lonen und/oder Sb(III)-lonen.

Dabei können die Fe(II)-lonen und/oder Sb(III)-lonen in jeder geeigneten Form eingesetzt werden. Bevorzugt sind die Fe(II)-lonen in Form von Salzen enthalten, insbesondere von FeCl₂ und/oder Fe(II)-Sulfat. Bevorzugt enthält die erfindungsgemäße Zusammensetzung die Sb(III)-lonen in Form von Salzen, insbesondere von Sb(III)-Tartrat, Sb(III)-Citrat, Sb(III)-Lactat, Sb(III)-Acetat, Sb(III)-Glycolat, Sb(III)-Chlorid, Sb(III)-Carbonat, Sb(III)-Sulfat und/oder Sb(III)-Phosphat. Anstelle der Sb(III)-Salze kann die Zusammensetzung auch Sb(III)-Oxid enthalten.

Die erfindungsgemäße Zusammensetzung enthält zusätzlich zu den Fe(II)-lonen und/oder Sb(III)-lonen mindestens 0,1% Sn(II)-lonen, wobei sich die %-Angaben auf das Gesamtgewicht der Zusammensetzung beziehen. Um eine besonders vorteilhafte Kombination von erhöhter Reduktionskraft und ausgeprägter Verlängerung des Lagerzeitraums zu erreichen, weist die erfindungsgemäße Zusammensetzung mindestens 0,15% Sn(II)-lonen auf, wobei sich die %-Angaben auf das Gesamtgewicht der Zusammensetzung beziehen. Bevorzugt enthält die erfindungsgemäße Zusammensetzung mindestens 0,3% Sn(II)-lonen, besonders bevorzugt 0,1 bis 50% Sn(II)-lonen, ganz besonders bevorzugt 0,15 bis 25% Sn(II)-Ionen.

Die Sn(II)-lonen können in jeder geeigneten Form eingesetzt werden. Bevorzugt enthält die erfindungsgemäße Zusammensetzung die Sn(II)-lonen in Form von Sn(II)-haltigen Salzen. Insbesondere können SnCl₂ und/oder Sn(II)-Sulfat verwendet werden.

In einer besonders bevorzugten Ausführungsform enthält die erfindungsgemäße Zusammensetzung 15% Sb(III)-Tartrat und 0,3% Sn(II)-Sulfat.

Die erfindungsgemäße Zusammensetzung kann grundsätzlich in jeder geeigneten Form vorliegen. Die Form der Zusammensetzung kann auch in Abhängigkeit der angestrebten Verwendung gewählt werden. Bevorzugt liegt die erfindungsgemäße Zusammensetzung in flüssiger, fester Form, z.B. als Pulver, oder als Suspension vor.

Die Dosierung der erfindungsgemäßen Zusammensetzung zur dauerhaften Senkung des Cr(VI)-Gehalts, bevorzugt unter einen Gehalt von 2 ppm Cr(VI), wird in Abhängigkeit vom Ausgangsgehalt an Cr(VI) im zu behandelnden Zement oder zementhaltigen Produkt gewählt.

Um einen besonders ausgeprägten Effekt auf die Reduktionskraft und auf eine Verlängerung des Lagerzeitraums zu erhalten, wird die erfindungsgemäße Zusammensetzung derart eingesetzt und dosiert, dass die Sn(II)-lonen, die Fe(II)-Ionen und/oder Sb(III)-lonen mindestens in einer bestimmten Konzentration pro zu reduzierendem ppm Cr(VI) im behandelten Zement oder Zementanteil des zementhaltigen Produkts vorliegen. Dabei liegen die Sn(II)-lonen im behandelten Zement oder zementhaltigen Produkt bevorzugt in einer Konzentration pro zu reduzierendem ppm Cr(VI) vor von mindestens 2×10⁻⁵% bezogen auf das Gesamtgewicht des Zementanteils, bevorzugt von mindestens 3×10⁻⁵%, besonders bevorzugt von 2×10⁻⁵% bis 1×10⁻²%, ganz besonders bevorzugt von 3×10⁻⁵% bis 5×10⁻³%. Die Fe(II)-lonen und/oder Sb(III)-lonen liegen im behandelten Zement oder zementhaltigen Produkt bevorzugt in einer Konzentration pro zu reduzierendem ppm Cr(VI) vor von mindestens 2×10⁻⁶% bezogen auf das Gesamtgewicht des Zementanteils, bevorzugt von mindestens 2×10⁻⁵%, besonders bevorzugt von 2x10⁻⁵% bis 1,5×10⁻²%, ganz besonders bevorzugt von 2×10⁻⁴% bis 1×10⁻²%.

Bevorzugt kann die Dosierung anhand nachstehender Zusammenstellung erfolgen:

| Cr(VI)-Gehalt im Zementanteil in ppm | Erfindungsgemäße Zusammensetzung in Gewichts-% bezogen auf den Zementanteil |
|---|---|
| 5 | 0,1 |
| 10 | 0,2 |
| 18 | 0,38 |
| 22 | 0,45 |

Die erfindungsgemäße Zusammensetzung kann verwendet werden zur Herstellung lagerstabilen Zements oder zementhaltiger Produkte. Bevorzugt wird die erfindungsgemäße Zusammensetzung zur Herstellung lagerstabilen Zements oder zementhaltiger Produkte verwendet, deren Zementanteil nicht mehr als 2 ppm Cr(VI) aufweist. Besonders bevorzugt kann die erfindungsgemäße Zusammensetzung zur Herstellung lagerstabilen Zements oder zementhaltiger Produkte verwendet werden, deren Zementanteil für einen Lagerzeitraum von 6 Monaten nicht mehr als 2 ppm Cr(VI) aufweist.

Die erfindungsgemäße Zusammensetzung kann zusätzlich ein oder mehrere Additive enthalten. Bei den Additiven kann es sich insbesondere um solche Additive handeln, die üblicherweise bei der Herstellung, Lagerung und/oder Verwendung von Zement oder zementhaltigen Produkten eingesetzt werden. Bevorzugt handelt es sich bei den Additiven um Betonverflüssiger, Fließmittel, Stabilisierer, Luftporenbildner, Erstarrungsbeschleuniger, Erhärtungsbeschleuniger, Verzögerer, Dichtungsmittel, Einpresshilfen, Spritzbetonbeschleuniger, Sedimentationsreduzierer, Low Water Binder, Schwindreduzierer, Mahlhilfsmittel, Gips, Hüttensand, Kalkstein, Zeolithe und/oder Phonolithe sowie um Mischungen davon. In diesem Zusammenhang wurde festgestellt, dass die erfindungsgemäße Zusammensetzung mit den genannten Additiven kombiniert werden kann ohne das Wechselwirkungen wie z.B. Ausfällungen etc. erhalten werden, wobei die Funktionsfähigkeit als Cr(VI)-Reduktor nicht eingeschränkt ist. wie zu d eingesetzt werden kann.

Die vorliegende Erfindung bezieht sich auch auf ein Verfahren zur Reduktion von Cr(VI) in Zement oder zementhaltigen Produkten. Das erfindungsgemäße Verfahren zeichnet sich dadurch aus, dass der Zement oder die zementhaltigen Produkte mit einer erfindungsgemäßen Zusammensetzung derart gemischt werden, so dass in der Mischung die Konzentration an Fe(II)- und/oder Sb(II)-lonen mindestens 2×10⁻⁶% pro zu reduzierendes ppm Cr(VI) und die Konzentration an Sn(II)-lonen mindestens 2×10⁻⁵% pro zu reduzierendes ppm Cr(VI) beträgt, wobei sich die %-Angaben jeweils auf das Gewicht des Zementanteils beziehen. Bevorzugt beträgt die Konzentration an Fe(II)- und/oder Sb(II)-lonen 2×10⁻⁵% bis 1,5×10⁻²% pro zu reduzierendem ppm Cr(VI) und die Konzentration an Sn(II)-lonen 2×10⁻⁵% bis 1×10⁻²% pro zu reduzierendem ppm Cr(VI). Die Beimischung der erfindungsgemäßen Zusammensetzung kann vor, während und/oder nach dem Mahlen des Zements oder der zementhaltigen Produkte erfolgt.

Im Folgenden wird die Erfindung anhand von Ausführungsbeispielen verdeutlicht.

### Beispiele:

Die Bestimmung der nachfolgenden Chromatgehalte wurde mit der Europäischen Standardmethode EN 196-10 vorgenommen.

### Beispiel 1:

Ausgangswert ohne Reduktor: 11 ppm Cr⁶⁺
Dosierung jeweils 0,2%

| | |
|---|---|
| a) 15% Sb(III)-Tartrat (Brechweinstein) | = 2,5 ppm |
| b) 15% Sb(III)-Tartrat (Brechweinstein) + 0,3% Sn(II)-Sulfat | = 1,65 ppm |

Lagerung des so reduzierten Zementes nach 4 Monaten:
zu a): 3,65 ppm Cr⁶⁺
zu b): 1,80 ppm Cr⁶⁺
Lagerung nach 6 Monaten
zu a): 4,9 ppm
zu b): 1,9 ppm

### Beispiel 2:

Ausgangswert ohne Reduktor 11 ppm
Dosierung jeweils 0,2%

| | |
|---|---|
| c) 15% Sn(II)-Sulfat | = 2,50 ppm |
| d) 15% Sn(II)-Sulfat + 0,3% Sb(III)-Tartrat | = 2,00 ppm |

Lagerung des so reduzierten Zementes nach 4 Monaten:
zu c): 3,00 ppm Cr⁶⁺
zu d): 2,10 ppm Cr⁶⁺
Lagerung nach 6 Monaten:
zu c): 3,1 ppm
zu d): 2,2 ppm

## Patentansprüche

1. Zusammensetzung für die Reduktion von Cr(VI)-lonen in Zement oder zementhaltigen Produkten, **dadurch gekennzeichnet, dass** die Zusammensetzung Fe(II)-lonen und/oder Sb(III)-lonen und mindestens 0,1% Sn(II)-lonen enthält, wobei sich die %-Angaben auf das Gesamtgewicht der Zusammensetzung beziehen.

2. Zusammensetzung nach Anspruch 1, **dadurch gekennzeichnet, dass** die Zusammensetzung mindestens 0,15% Sn(II)-lonen enthält, wobei sich die %-Angaben auf das Gesamtgewicht der Zusammensetzung beziehen, bevorzugt mindestens 0,3% Sn(II)-lonen, besonders bevorzugt 0,1 bis 50% Sn(II)-lonen, ganz besonders bevorzugt 0,15 bis 25% Sn(II)-lonen.

3. Zusammensetzung nach einem der Ansprüche 1 oder 2, **dadurch gekennzeichnet, dass** die Zusammensetzung mindestens 0,01% Fe(II)-lonen und/oder Sb(III)-lonen enthält, wobei sich die %-Angaben auf das Gesamtgewicht der Zusammensetzung beziehen, bevorzugt mindestens 0,1 % Fe(II)-lonen und/oder Sb(III)-lonen, besonders bevorzugt 0,1 bis 75% Fe(II)-Ionen und/oder Sb(III)-lonen, ganz besonders bevorzugt 1 bis 50% Fe(II)-Ionen und/oder Sb(III)-lonen.

4. Zusammensetzung nach einem der vorhergehenden Ansprüche, **dadurch gekennzeichnet, dass** die Sn(II)-lonen in Form von Salzen enthalten sind, insbesondere von SnCl₂ und/oder Sn(II)-Sulfat.

5. Zusammensetzung nach einem der vorhergehenden Ansprüche, **dadurch gekennzeichnet, dass** die Fe(II)-lonen in Form von Salzen enthalten sind, insbesondere von FeCl₂ und/oder Fe(II)-Sulfat.

6. Zusammensetzung nach einem der vorhergehenden Ansprüche, **dadurch gekennzeichnet, dass** die Sb(III)-lonen in Form von Salzen enthalten sind, insbesondere von Sb(III)-Tartrat, Sb(III)-Citrat, Sb(III)-Lactat, Sb(III)-Acetat, Sb(III)-Glycolat, Sb(III)-Chlorid, Sb(III)-Carbonat, Sb(III)-Sulfat und/oder Sb(III)-Phosphat.

7. Zusammensetzung nach einem der vorhergehenden Ansprüche, **dadurch gekennzeichnet, dass** die Zusammensetzung 15% Sb(III)-Tartrat und 0,3% Sn(II)-Sulfat enthält.

8. Zusammensetzung nach einem der vorhergehenden Ansprüche, **dadurch gekennzeichnet, dass** die Zusammensetzung in flüssiger, fester Form oder als Suspension vorliegt.

9. Zusammensetzung nach einem der vorhergehenden Ansprüche, **dadurch gekennzeichnet, dass** die Zusammensetzung zusätzlich ein oder mehrere Additive enthält, bevorzugt handelt es sich bei den Additiven um Betonverflüssiger, Fließmittel, Stabilisierer, Luftporenbildner, Erstarrungsbeschleuniger, Erhärtungsbeschleuniger, Verzögerer, Dichtungsmittel, Einpresshilfen, Spritzbetonbeschleuniger, Sedimentationsreduzierer, Low Water Binder, Schwindreduzierer, Mahlhilfsmittel, Gips, Hüttensand, Kalkstein, Zeolithe und/oder Phonolithe sowie um Mischungen davon.

10. Verwendung einer Zusammensetzung nach einem der Ansprüche 1 bis 9 zur Herstellung lagerstabilen Zements oder zementhaltiger Produkte.

11. Verfahren zur Reduktion von Cr(VI) in Zement oder zementhaltigen Produkten, **dadurch gekennzeichnet, dass** der Zement oder die zementhaltigen Produkte mit einer Zusammensetzung nach einem der Ansprüche 1 bis 9 derart gemischt werden, so dass in der Mischung die Konzentration an Fe(II)-und/oder Sb(II)-lonen mindestens 2×10⁻⁶% pro zu reduzierendes ppm Cr(VI) und die Konzentration an Sn(II)-lonen mindestens 2×10⁻⁵% pro zu reduzierendes ppm Cr(VI) beträgt, wobei sich die %-Angaben jeweils auf das Gewicht des Zementanteils beziehen.

12. Verfahren nach Anspruch 11, **dadurch gekennzeichnet, dass** die Beimischung der Zusammensetzung nach einem der Ansprüche 1 bis 9 vor, während und/oder nach dem Mahlen des Zements oder der zementhaltigen Produkte erfolgt.
